# EUROPÄISCHE PATENTSCHRIFT

(11) **EP 3 357 677 B1**
(45) Veröffentlichungstag und Bekanntmachung des Hinweises auf die Patenterteilung: **08.05.2024**
(21) Anmeldenummer: 17208587.0
(22) Anmeldetag: 19.12.2017
(51) Int. Cl.: B07B 1/12, B01D 29/11, B07B 1/22, B07B 1/46, B01D 29/44, B30B 9/26

(54) **VORRICHTUNG ZUM PRESSEN, SEIHERSTABPAKET UND VORRICHTUNG SOWIE VERFAHREN ZUR HERSTELLUNG EINES SEIHERSTABPAKETES**
DEVICE FOR PRESSING, CAGE BAR PACKAGE AND DEVICE AND METHOD FOR PRODUCING A CAGE BAR PACKAGE
DISPOSITIF DE PRESSAGE, ENSEMBLE BARRE DE FILTRE À TAMIS ET DISPOSITIF AINSI QUE PROCÉDÉ DE FABRICATION D'UN ENSEMBLE BARRE DE FILTRE À TAMIS

(30) Priorität: 12.01.2017 DE 102017000366
(43) Veröffentlichungstag der Anmeldung: 08.08.2018
(73) Patentinhaber: Harburg-Freudenberger Maschinenbau GmbH, 21079 Hamburg (DE)
(72) Erfinder: Drogin, Sergey, 21073 Hamburg (DE)
(74) Vertreter: Klickow & Wetzel PartGmbB

(56) Entgegenhaltungen:
- WO-A1-00/25889
- DE-A1- 10 052 715
- FR-A1- 2 649 642
- GB-A- 1 000 773
- US-A- 2 049 336
- US-A- 5 394 600

## Beschreibung

Die Erfindung betrifft ein Seiherstabpaket für eine Vorrichtung zum Pressen, aufweisend einen Seiherstabkorb mit einer Mehrzahl von Seiherstäben.

Es sind Pressen verschiedener Bauart bekannt, um fließfähige, flüssige oder thixotrope Bestandteile aus verschiedenen Substanzen, Festkörpern, organischen oder anorganischen Materialien durch Pressvorgänge zu separieren. Insbesondere für pflanzliche Produkte haben sich zur Separation von Flüssigkeiten und vor allem ölhaltigen Bestandteilen sogenannte Seiher-Schneckenpressen bewährt, in deren Pressraum erhebliche Presskräfte und Pressdrücke auf das Pressgut bzw. auf das die ölhaltigen Bestandteile beinhaltende Komprimat einwirken.

Der Pressraum, welcher auch Seiherkammer oder Presskammer genannt wird, ist wenigstens teilweise durch sogenannte Seiherstabkörbe geometrisch begrenzt. Häufig sind die Seiherstabkörbe in zylindrischer bzw. hohlzylindrischer Geometrie ausgeführt und in einzelne Seiherstabfelder zur Aufnahme und/oder Halterung von Seiherstäben unterteilt.

Seiherstäbe bzw. Seiherstabkörbe der einleitend genannten Art werden im Bereich von Vorrichtungen zum Abpressen von fließfähigen bzw. flüssigen Stoffen aus in die Vorrichtung eingebrachten Materialien oder Produkten verwendet. Es kann beispielsweise ein Abpressen von flüssigen Stoffen aus Tierkadavern, Schlachtabfällen oder ölhaltigen Früchten bzw. Pflanzen erfolgen. Die Vorrichtungen zum Abpressen sind trommelartig ausgebildet und die Seiherstäbe erstrecken sich in einer Längsrichtung der Trommel. In dieser Längsrichtung erfolgt auch ein Transport der zu verarbeitenden Substanzen. Im Bereich eines Trommelausganges werden die Restsubstanzen nahezu feuchtigkeitsfrei aus dem Trommelinnenraum ausgetragen. Ein Transport durch die Trommel hindurch erfolgt unter Verwendung einer Druck- und Transportschnecke.

Während des Transportes der Substanzen durch die Trommel hindurch, erfolgt durch den Pressvorgang zwischen den Begrenzungsflächen der Schneckengänge der Transportschnecke und den Seiherstäben ein Abpressen der in den Eingangssubstanzen enthaltenen Flüssigkeiten. Zur Ermöglichung eines Abfließens der ausgepressten fließfähigen Bestandteile, sind die Seiherstäbe mit spaltartigen Abständen relativ zueinander angeordnet. Zur Gewährleistung eines optimalen Verlaufes des Abpressvorganges verkleinert sich die Querschnittfläche des Schneckenganges ausgehend vom Einlass in Richtung auf den Auslass.

Vorrangiges Ziel des Pressvorganges ist eine möglichst vollständige Separation von fließfähigen und insbesondere ölhaltigen Bestandteilen aus dem Pressgut. Weiterhin wird das Ziel eines möglichst hohen Stoffvolumenstromes angestrebt. Beide Zielsetzungen werden in möglichst optimaler Weise angestrebt dadurch, dass die Maschinenelemente zur Aufbringung der Presskräfte mit maximaler Leistung konstruiert werden und der Pressraum in geeigneter Weise geometrisch ausgelegt wird.

Auch die geometrische Ausbildung des den Pressraum wenigstens teilweise begrenzenden Seiherkorbes hat auf den Separationsvorgang erheblichen Einfluss.

Beeinflussbar ist die geometrische Ausbildung des Seiherkorbes durch eine Vielzahl von Geometrieparametern und insbesondere durch die Anstellung der Seiherstäbe relativ zueinander sowie deren Beabstandung.

Die relativen Beabstandungen der Seiherstäbe zueinander bestimmen die Spaltöffnungen für den Durchtritt von zu separierenden Bestandteilen aus dem Komprimat. Die Anstellung der Seiherstäbe kann grundsätzlich in zweierlei Weise erfolgen:
a) Seiherstäbe "glatt" angestellt; hier werden die zu einem vorzugsweise hohlzylindrischen Seiherkorb angeordneten Seiherstäbe radial fluchtend angeordnet und/oder
b) Seiherstäbe "auf Keil" angestellt; hier werden die zu einem vorzugsweise hohlzylindrischen Seiherkorb angeordneten Seiherstäbe mit einem wenige Grad betragenden Winkelversatz zur radial fluchtenden Situation angeordnet.

Unabhängig von der geometrischen Lage und Anordnung der den Seiherkorb bildenden Seiherstäbe sind diese Maschinenelemente ganz erheblichen Belastungen ausgesetzt, die negativen Einfluss auf die Lebensdauer haben.

Es können mechanische Belastungen erheblichen Umfanges auf die Seiherstäbe einwirken, die sich aus dem Pressvorgang ergeben und sowohl Flächenpressungen, Kraftwirkungen, Biegebelastungen als auch Torsionsmomente umfassen. Mechanische Belastungen dieser Art können je nach Art des Pressenbetriebes kontinuierlich, diskontinuierlich und/oder lokal an dem Seiherkorb alternierend auftreten und extreme Werte erreichen, da insbesondere bei Schneckenpressen Druckverhältnisse von bis zu 500t pro Pressenringquerschnitt erreicht werden. Ein wesentlicher weiterer Faktor dieser Belastungskomponenten sind die Geschwindigkeiten dieser Lastspiele, deren Frequenz erheblichen zusätzlichen und negativen Lebensdauereinfluss aufweisen.

Neben den Belastungen mechanischen Ursprungs wirken sich abrasive Vorgängen zwischen dem Pressgut und den Seiherstäben an deren Kontaktflächen lebensdauervermindernd aus. Umwälzvorgänge, Scherbewegungen und der axial gerichtete Pressguttransport durch die Schnecke verursachen Relativbewegungen zwischen den pressraumeinwärts liegenden Seiherstabflächen.

Neben dem Kaltpressverfahren sind auch Heißpressungen bekannt, mit deren Hilfe die Ausbringung der zu separierenden Bestandteile aus dem Substanzen und Pressmaterialien gesteigert werden kann. Infolge dessen können auch thermische Belastungen auf die Seiherstabkörbe einwirken und lokal variieren, sodass neben der eigentlichen Temperatureinwirkung auch Temperaturgradienten vorliegen können, die Materialspannungen innerhalb der Seiherstäbe hervorrufen.

Als Resultat der verschiedenen additiv oder alternativ vorliegenden Belastungen auf die Seiherstäbe und trotz entgegenwirkender Konditionierungsmaßnahmen, wie beispielsweise einer Ausstattung der Verschleißflächen mit einer Panzerung, sind die Seiherstäbe lebensdauerbehaftet und dadurch Verschleißteile, die immer wieder erneuert werden müssen.

Die Revision eines Seiherstabkorbes durch Wechsel der Seiherstäbe hat eine Reihe von Nachteilen und Schwierigkeiten:
a) Sehr schlechte Arbeitsbedingungen an den Pressen durch starke Verschmutzungen auch aufgrund von Pressmaterialrückständen,
b) hohe Temperaturen und schlechte Lichtverhältnisse, die häufig in Kombination vorliegen mit
c) begrenzten, beengten Platzverhältnissen und/oder Zugänglichkeit und
d) erheblichen gesundheitlichen Belastungen für das mit dieser Tätigkeit betraute Personal durch ständig gebücktes Arbeiten, außerdem
e) kann die Montagequalität nicht zweifelsfrei sichergestellt werden, wenn das Montagepersonal nicht über ausreichende Kenntnisse, Qualifikation und Erfahrung verfügt.

Besonders unerwünscht und die Wirtschaftlichkeit solcher Pressen negativ beeinflussend ist der zeitliche Aufwand für solche Revisionsmaßnahmen. Auch eine Kombination von allgemeinen Wartungs- und Inspektionsmaßnahmen verbessert die Situation kaum, da der Zeitbedarf für den Seiherstäbe-Wechsel erheblich ist.

Die Seiherstabkörbe sind vorzugsweise in Seiherstabfelder segmentiert, deren Seiherstäbe jeweils separat demontiert und ausgewechselt werden können. Der Wechsel eines Feldes von Seiherstäben dauert an der Pressenanlage rund 1,5 Stunden. Handelt es sich um eine Seiherpresse mit beispielsweise 7 Feldern ist mit einer gesamten Dauer von rund 10,5 Stunden Revisionsaufwand und damit Produktionsstillstandzeit zu rechnen, bei Anlagen mit 11 Feldern sogar mit rund 16,5 Stunden. Gegebenenfalls erhöhen sich die Produktionsausfallzeiten um Zeiträume für das Herunterfahren und gegebenenfalls Abkühlen der Anlage sowie um den Aufwand zum Wiederanfahren.

Der Montageaufwand nach dem Entfernen der verschlissenen Seiherstäbe zum Beispiel eines Seiherstabfeldes ist erheblich. Die durchzuführenden einzelnen Arbeitsschritte pro Feld sind:
a) Seiherstäbe, Ausgleichsstäbe und Abschlussstäbe aus dem Lager holen und an der Montagestelle bereitstellen,
b) vorhandene Umverpackungen entfernen und gegebenenfalls Konservierungsmittel, Schutzbeläge etc. entfernen,
c) Ausrichtung jedes einzelnen Seiherstabes gemäß der erforderlichen Montagepositionierung und Orientierung herstellen,
d) Seiherstäbe in den Korb einlegen und mit Ausgleichsstäben und Abschlussstäben wenigstens einen Teilbereich des Feldes auskleiden,
e) Klemmleisten und Abstreicher anschrauben,
f) Spannung prüfen um sicherzustellen, dass die Seiherstäbe verspannungsarm durch die Klemmleisten gehaltert sind,
g) falls eine unzulässige Verspannungssituation vorliegt, werden wenigstens eine Klemmleiste und/oder Abstreicher abgeschraubt, um
h) durch eine Anpassung des Feldes die Verspannungssituation zu reduzieren oder zu eliminieren,
i) die wenigstens eine Klemmleiste und/oder Abstreicher anschrauben und
j) Spannung und damit den Erfolg der Anpassung des Feldes prüfen sowie
k) im abschließenden Montageschritt die Parallelität der Seiherstäbe prüfen, wobei
l) im Fall eines Winkelversatzes der Seiherstäbe außerhalb der Paralleltoleranz weitere Anpassungsarbeiten zur Herstellung der Parallelitätserfordernisse erforderlich sind.

Der durch hohe Komplexität und hohen Schwierigkeitsgrad gekennzeichnete Montageprozess zur Revision von Seiherstabkörben kann verschiedene Fehler mit teils weitreichender Konsequenz nach sich ziehen. Werden die Seiherstäbe in falscher Orientierung und mit einer gepanzerten Seitenfläche nicht in Richtung des Pressraumes eingebaut, ist die Lebensdauer dieser Seiherstäbe erheblich verkürzt. Die abweichend vom Sollmaß der Spaltweiten montierten Seiherstäbe resultieren in einen Seiherkorb, dessen Ausbringung der fließfähigen, abzupressenden Substanzen erheblich verschlechtert ist.

Wenn eine Seiherstabanordnung "auf Keil" vorgesehen, aber durch Montageungenauigkeiten nicht in vorgeschriebener Weise erfüllt ist, bildet sich nicht oder nicht ausreichend das gewünschte inwärts gerichtete Sägezahnprofil aus. Als Folge werden die Umwälzbewegungen des Komprimats verschlechtert und die Ausbringung der fließfähigen, abzupressenden Substanzen ist reduziert.

Sollen solche Montagefehler korrigiert bzw. abgestellt werden, erhöhen sich der Montageaufwand und die damit verbundenen Anlagenstillstandszeiten weiter. Insbesondere bei Schneckenpressen mit einer Seiherkammer sind Produktionsausfallzeiten wirtschaftlich besonders nachteilig, weil Vorrichtungen zum Abpressen dieser Art auf sehr große Durchsatzvolumina ausgelegt sind und hohe Investitionskosten verursachen. Die Kosten für 1 Stunde Stillstandszeit summieren sich schnell auf etwa 2000 Euro.

Aus dem Stand der Technik bekannt ist die Schrift FR 2 649 642 A1, die ein Seiherstabpaket zum Einbau in einen Seiherstabkorb einer Schneckenpresse offenbart, wobei das Seiherstabpaket mehrere Seiherstäbe und jeweils zwischen den Seiherstäben angeordnete Abstandhalter aufweist, die mithilfe eines Kabels oder mehrerer kreisbogenförmiger Stangen miteinander verbunden sind.

Aus der US 5394600 A ist es bereits bekannt, ein Seiherstabpaket gemäss dem Oberbegriff des Anspruchs 1 in einen Seiherkorb einzubauen. Das Seiherstabpaket besteht aus einer Mehrzahl von Seiherstäben und wird in der Seihertrommel gehaltert. Das Seiherstabpaket besitzt durch eingesetzte Verbindungsmittel eine Flexibilität.

Ein weiteres Seiherstabpaket zur Verwendung im Bereich des Seiherkorbes es einer Seiherpresse wird in der GB 1000773 A beschrieben.

Eine Aufgabe der Erfindung ist es, die zuvor genannten Nachteile im Zusammenhang mit der Seiherstabrevision wenigstens teilweise zu reduzieren.

Zur Lösung schlägt die Erfindung die Merkmalskombination des unabhängigen Patentanspruch 1 vor.

Die Bildung von Seiherstabsets bestehend aus einer Mehrzahl von bestimmt orientierten und lagedefinierten Seiherstäben, die durch wenigstens eine ggf. temporär und reversibel vorgesehene Setvorrichtung fixiert sind, ergänzt die Lösung der Aufgabe. Das auf diese Weise gebildete Seiherstabpaket unterstützt das gleichzeitige, lagerichtige und orientierungskorrekte Handling und den Einbau in einen Seiherstabkorb und/oder ein Seiherstabfeld.

Die erfindungsgemäß zur Bildung von Seiherstabpaketen vorgesehene Setvorrichtung ist im Wesentlichen aufgebaut durch wenigstens ein Basiselement und Halterungsmittel. Das Basiselement dient als Anlageschulter und/oder Aufnahmeteil für die Mehrzahl von Seiherstäben des Sets und ist beispielsweise aus einem Halbzeug gefertigt. Das wenigstens eine Halterungsmittel realisiert die Lagefixierung der Seiherstäbe zumindest relativ zum Basiselement.

Das mindestens eine Basiselement kann als bahn- oder bogenförmiges sowie als profilförmiges Aufnahmeteil ausgebildet sein. Möglich sind Erstreckungen im Wesentlichen in einer Ebene oder räumlich. Ist das wenigstens eine Basiselement der Setvorrichtung in einer ebenen Erstreckung realisiert, ist vorzugsweise vorgesehen, dass eine Verformung der Setvorrichtung mit dem Seiherstabset in eine meist räumliche Geometrie unterstützt ist, damit der Seiherstabseteinbau in den Seiherstabkorb als Baueinheit realisierbar ist.

Die Erfindung erkennt, dass sich durch die Bildung von Seiherstabsets als mittelbar oder unmittelbar in einen Seiherkorb einbaubare Einheiten einer Mehrzahl von bestimmt orientierten und lagedefinierten Seiherstäben gegenüber dem Stand der Technik erhebliche Vorteile erziehen lassen und/oder die bestehenden Nachteile wenigstens teilweise reduzierbar sind.

Durch die erfindungsgemäß vorgeschlagenen Seiherstabsets können Teile der Montageschritte einer Seiherstabrevision für Vorrichtungen zum Abpressen von fließfähigen bzw. flüssigen Stoffen auf einen Zeitabschnitt außerhalb der Vorrichtungsstillstandszeit verlagert werden. Auf diese Weise kann die Stillstandszeit wenigstens reduziert, im Idealfall auch minimiert werden.

Ein erfindungsgemäßes Seiherstabpaket kann entweder als eine temporär begrenzte Baueinheit, oder als eine dauerhafte Baueinheit ausgeführt sein.

Die Ausführung eines Seiherstabpaketes als eine temporäre Baueinheit ist insbesondere zur Bildung der klassischerweise verwendeten Seiherstabkörbe geeignet, die keine Setvorrichtung in dem erfindungsgemäßen Sinn aufweisen.

Die Ausführung eines Seiherstabpaketes als eine dauerhafte Baueinheit ist vorteilhaft, wenn die Setvorrichtung derart ausgebildet ist, dass diese den Pressvorgang nicht behindert und/oder Schutzfunktionen für die Pressvorrichtung realisiert. In diesem Fall wird die Einbauzeit eines Seiherstabpaketes in ein Seiherstabfeld bzw. einen Seiherstabkorb verringert, da die für das Entfernen der Setvorrichtung benötigte Zeit zumindest teilweise entfällt.

Weiterhin ist es vorteilhaft, wenn ein als eine dauerhafte Baueinheit ausgeführtes Seiherstabpaket mit herkömmlichen Vorrichtungen zum Pressen kompatibel ausgeführt ist und die effektive Presstrecke, d.h. die Länge des eigentlichen Seiherstabkorbes, gegeben durch die Länge der im inneren Umfang eines Seiherstabkorbes freien Schlitze zwischen den Seiherstäben, nicht vermindert.

Die zumindest temporär gebildete Baueinheit bestehend aus Seiherstabset und Setvorrichtung mit einer Erstreckung im Wesentlichen in zwei Raumrichtungen, das heißt Erstreckung in einer Ebene, bietet den Vorteil, dass Lagerung, Transport und Versand sowie das Handling der Baueinheit erheblich vereinfacht sind und der erforderliche Raumbedarf reduziert ist. Für den Einbau des Seiherstabsets in den Seiherstabkorb bzw. eines seiner Felder ist die Verformung aus der ebenen Erstreckung in eine zu der Kontur des Seiherstabkorbes kongruente Geometrie erforderlich. Dazu ist erfindungsgemäß vorgesehen, dass sowohl das Basiselement als auch die Setvorrichtung die Verformung zwischen einer ebenen Erstreckung und der Einbaugeometrie unterstützen.

Zur Fixierung und Aussteifung des Seiherstabpaketes in einer zum Seiherstabkorb kongruenten Kontur, die in der Regel einem Teilhohlzylinder entspricht, kann zusätzlich zu dem mindestens einen Halterungsmittel, das beispielsweise als zumindest teilelastisches Band, Spanngurt oder als eine feste Verbindung von dem mindestens einen Basiselement und den Seiherstäben ausgeführt sein kann, mindestens eine Strebe oder Stange verwendet sein, die vorteilhaft benachbart oder symmetrisch zum summarischen Gewichtsmittelpunkt des Seiherstabpaketes angeordnet ist bzw. sind.

Ist das Halterungsmittel nicht als eine feste Verbindung, wie beispielsweise eine Verlötung oder eine Verschweißung, realisiert, so weist dieses in einer vorteilhaften Ausführungsform der Erfindung zumindest einen zugbelastbaren elastischen Abschnitt auf, der bereichsweise eine Längenänderung und gleichzeitig eine zur Fixierung des Seiherstabsets erforderliche Mindestspannkraft in allen Längenänderungszuständen unterstützt. Der elastische Abschnitt kann beispielsweise als ein elastomeres oder gummibasierendes oder kautschukbasierendes oder aus Stahl bestehendes Spannband realisiert sein. Alternativ kann der elastische Abschnitt des Halterungsmittels als ein Federelement, vorteilhaft als eine Zugfeder, besonders vorteilhaft als eine Schraubfeder, ausgebildet sein.

Das Seiherstabpaket als zumindest temporär gebildete Baueinheit bestehend aus Seiherstabset und Setvorrichtung mit einer Erstreckung im Wesentlichen in drei Raumrichtungen, das heißt Erstreckung in räumlicher Richtung und vorzugsweise kongruent zur Kontur des Seiherstabkorbes, bietet den Vorteil, dass ohne eine vorzusehende Verformungsfähigkeit der Einbau in den Seiherstabkorb bzw. eines seiner Felder unterstützt ist. Der Raumbedarf dieser im Wesentlichen teilzylindrischen oder teilhohlzylindrischen Baueinheit ist beim Handling, Lagerung und Transport jedoch erhöht.

Weiterer Bestandteil der Erfindung ist eine je nach Ausführungsform der zumindest temporär gebildeten Baueinheit bestehend aus Seiherstabset und Setvorrichtung erforderliche Vorrichtung zur Herstellung eines Seiherstabpaketes. Ist die Baueinheit insbesondere zylindrisch oder teilzylindrisch bzw. teilhohlzylindrisch erstreckt, kann eine erfindungsgemäße Vorrichtung die Zusammenstellung des Seiherstabsets zum einen und die Herstellung eines Seiherstabpaketes, der Baueinheit bestehend aus Seiherstabset und Setvorrichtung, zumindest unterstützen oder vereinfachen.

Eine erfindungsgemäße Vorrichtung zur Herstellung eines Seiherstabpaketes weist in einer vorteilhaften Ausführungsform eine teilzylindrische Aussparung als Aufnahmebereich für die das Seiherstabset bildenden Seiherstäbe und die ggf. zwischen diesen zu positionierenden Distanzelementen auf. Die Aussparung ist in einer besonders vorteilhaften Ausführungsform der Vorrichtung zur Herstellung eines Seiherstabpaketes an die Größe des vorgesehenen Seiherstabkorbes angepasst. Die Seiherstäbe sind mithilfe einer Spannvorrichtung in der erforderlichen Orientierung und Positionierung fixierbar, sodass mittels einer Setvorrichtung ein Seiherstabpaket herstellbar ist.

In einer alternativen Ausführungsform der erfindungsgemäßen Vorrichtung zur Herstellung eines Seiherstabpaketes, weist diese eine teilzylindrische, konvexe Wölbung auf, auf der die Seiherstäbe zu einem Seiherstabset angeordnet werden und ggf. Distanzelemente zwischen diesen platziert werden. Derartige Vorrichtungen zur Herstellung eines Seiherstabpaketes sind einsetzbar, wenn eine außenseitige und feste Verbindung zu einem Seiherstabpaket, beispielsweise durch Verschwei-ßen oder Verlöten der Seiherstäbe und ggf. der Distanzelemente mit mehreren Blechsteifen erfolgen soll.

Weiterhin ist auch eine ebene Ausführungsform einer Vorrichtung zur Herstellung eines Seiherstabpaketes denkbar.

Ein beispielhaftes Verfahren zum Einbau eines erfindungsgemäßen Seiherstabpaketes bzw. Seiherstabsets weist zumindest folgende Schritte auf:
a) Seiherstabpaket an die Montagestelle heranbringen,
b) gegebenenfalls vorhandenes Verpackungsmaterial und Kantenschutz entfernen,
c) falls erforderlich Seiherstabpaket reinigen - beispielsweise Entfernen von Konservierungsmitteln,
d) das Seiherstabpaket als Baueinheit mit seinem Seiherstabset, gebildet aus einer Mehrzahl von bestimmt orientierten und lagedefinierten Seiherstäben, in den Seiherstabkorb bzw. eines seiner Felder einsetzen,
e) Ggf. Demontage der Setvorrichtung dadurch, dass das wenigstens eine Halterungsmittel entfernt und anschließend das Basiselement ausgebaut wird,
f) optionale Klemmleisten und Abstreicher anschrauben,
g) Spannung prüfen um sicherzustellen, dass die Seiherstäbe verspannungsarm durch die Klemmleisten gehaltert sind,
h) falls die Spannungssituation außerhalb der zulässigen Toleranz ist wird eine Klemmleiste gelöst und zum Zweck der Ausdistanzierung werden einer oder mehrere Einlegestreifen eingebaut,
i) nach dem erneuten Anschrauben der Klemmleiste wir die Spannung nochmals kontrolliert.

Felduntersuchungen hinsichtlich der Montagezeiten zeigen, dass sich bis zu ca. 85% des Zeitbedarfes für die herkömmliche Einzelmontage von Seiherstäben einsparen lässt. Das bedeutet, dass die übliche Montagezeit von einzelnen Seiherstäben in einer Größenordnung von 26 bis 27 Minuten durch die Erfindung auf einen Bereich von etwa 4 Minuten bei gleicher Seiherstabanzahl reduzierbar ist. Neben diesem erheblichen wirtschaftlichen Vorteil infolge der drastischen Reduzierung von Anlagenstillstandszeiten ergeben sich weitere positive Aspekte.

Durch die Herstellung von Seiherstabsets beim Produzenten und durch fachkundiges Personal ist sichergestellt, dass alle Seiherstäbe sowohl der Spezifikation entsprechen, als auch in montagekorrekter Position und Orientierung angeordnet sind, sodass von einer bis zu 100%igen Qualitätskontrolle ausgegangen werden kann. Infolge dessen wird auch ein Stillstandsrisiko bedingt durch Störungen durch Montagefehler praktisch eliminiert.

Die Montage des erfindungsgemäßen Seiherstabpaketes ist gegenüber Einzelmontage von Seiherstäben erheblich vereinfacht und reduziert die körperliche Belastung des Montagepersonals.

Infolge des extrem reduzierten Zeitbedarfs der Montage von Seiherstabpaketen, können Seiherstabrevisionen auch innerhalb sehr kurzer geplanter Pressenstillstandszeiten realisiert werden.

In den Zeichnungen sind Ausführungsbeispiele der Erfindung dargestellt. Es zeigen:
- Fig. 1: ein Seiherstabpaket (100), im Wesentlichen bestehend aus einer Setvorrichtung (200) und einem Seiherstabset (10) in einer perspektivischen Ansicht,
- Fig. 2: ein Ausführungsbeispiel des Basiselementes (210) der Setvorrichtung (200) in einer dreidimensionalen Modelldarstellung,
- Fig. 3: in einer perspektivischen Illustration das Seiherstabpaket (100) in einem Montageschritt eingesetzt in den Seiherstabkorb (400),
- Fig. 4: die erfindungsgemäße Vorrichtung zur Herstellung des Seiherstabpaketes (300) bzw. des Seiherstabsets (10) in einer räumlichen Illustration,
- Fig. 5: eine Vorrichtung zur Herstellung eines Seiherstabpaketes (300) mit einer Mehrzahl von in die Vorrichtung eingelegten Seiherstäben (11) zur Bildung eines Seiherstabsets (10),
- Fig. 6: eine Ausführungsvariante des Seiherstabpaketes (100) im Wesentlichen bestehend aus einer Setvorrichtung (200) und einem Seiherstabset (10) in einer perspektivischen Ansicht,
- Fig. 7: die Detailansicht auf einen Bereich des Seiherstabsets (10) mit einer Mehrzahl von Seiherstäben (11) mit Halterungsmittel (220) und daran festgelegtem Antirutschstreifen (214),
- Fig. 8: eine Ausführungsvariante des Seiherstabpaketes (100) im Wesentlichen bestehend aus einer Setvorrichtung (200) und einem Seiherstabset (10) in einer weiteren perspektivischen Ansicht,
- Fig. 9: eine perspektivische Ansicht einer weiteren erfindungsgemäßen Ausführungsform zweier Seiherstabpakete (100) und
- Fig. 10: eine perspektivische Ansicht einer alternativen Ausführungsform eines Seiherstabpaketes (100) mit Halterungsdrähten und Handgriffen.

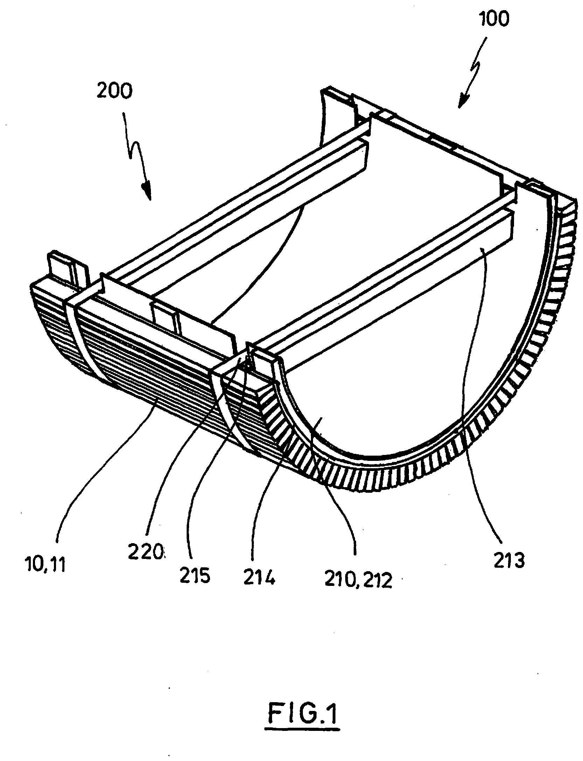

Figur 1 zeigt ein Seiherstabpaket (100), im Wesentlichen bestehend aus einer Setvorrichtung (200) und einem Seiherstabset (10), in einer perspektivischen Ansicht. Das Seiherstabset (10) ist gebildet durch eine Mehrzahl von Seiherstäben (11), orientiert und positioniert in montagerichtiger Lage.

Das Seiherstabset (10) kann - sofern erforderlich - um separate Distanzelemente zwischen den Seiherstäben (11) ergänzt sein (nicht dargestellt). Separate Distanzelemente sind verbaut, wenn die Seiherstäbe (11) in einer Ausführungsvariante ohne integrierte Distanzeinrichtungen vorliegen.

Das in Figur 1 illustrierte Beispiel einer Ausführungsform des Seiherstabpaketes (100) ist aufgebaut auf einer Setvorrichtung (200) mit halb-hohlzylindrischem Basiselement (210, 212) und ist derart geometrisch gestaltet, dass eine Form weitgehend kongruent zur Geometrie des Seiherstabkorbes (400) bzw. eines seiner Felder vorliegt. Auf diese Weise ist durch die Mehrzahl von Seiherstäben (11) ein Seiherstabset (10) realisiert, dessen Form einem Hohlzylinderabschnitt entspricht und als Baueinheit in den Seiherstabkorb (400) eingesetzt werden kann. Die gezeigte geometrische Ausprägung kann entweder durch ein zylindrisches oder teilzylindrisches bzw. teilhohlzylindrisches Basiselement (210, 212) oder ein elastisches und/oder verformbares ebenes Basiselement (210, 211) erreicht werden.

Die Setvorrichtung (200) mit seinem wenigstens einen Basiselement (210) wird ergänzt durch wenigstens ein Halterungsmittel (220). Zweck des Halterungsmittels (220) ist es, die Mehrzahl von Seiherstäben (11) des Seiherstabsets (10) zumindest temporär in ihrer zuvor in Orientierung und Positionierung eingestellten Montageanordnung und relativ zum Basiselement (210) zu haltern.

Im gezeigten Ausführungsbeispiel ist das Halterungsmittel (220) durch zwei Spannbänder gebildet, die im Sinn einer definierten Lage durch wenigstens eine Ausklinkung (215) des Basiselementes (210) geführt sein können. Alternativ sieht die Erfindung vor, dass auch nur ein vorzugsweise zentrisch angeordnetes Spannband oder auch mehrere symmetrisch oder asymmetrisch positionierte Spannbänder die Halterungsaufgabe realisieren.

Besonders vorteilhaft ist die mindestens eine Ausklinkung (215) in einem Randbereich und/oder in einem Flächenbereich des Basiselementes (210) vorgesehen.

Geeignete Halterungsmittel (220) können Bänder aus Metall, Kunststoff oder verschiedenen elastomeren Materialien sein, die entweder eine Verbindungseinrichtung aufweisen oder mittels eines Verschlusswerkzeuges nach der gezeigten Positionierung in eine äußere Umschlingungslage um das Seiherstabpaket (100) zu einem Endlosband gefügt und gespannt werden.

Das Halterungsmittel (220) übt infolge dessen Vorspannung eine Spannkraft auf das Seiherstabset (10) aus die wenigstens so bemessen ist, dass die Positionsveränderung der Seiherstäbe (11) relativ zum Basiselement (210) zuverlässig und auch bei Handhabungs- und Transportvorgängen des Seiherstabpaketes (100) verhindert wird.

Um die hergestellte Positionierung und Orientierung der Seiherstäbe (11) des Seiherstabsets (10) relativ zum Basiselement (210) und damit deren Halterung durch das wenigstens eine Halterungsmittel (220) zu unterstützten oder zu verbessern kann wenigstens ein Antirutschstreifen (214) an dem Basiselement (210) vorgesehen sein.

Die Erfindung erkennt, dass ein erhöhter Haftreibungswert der Anlageflächen bzw. Kontaktflächen zwischen Basiselement (210) und den Seiherstäben (11) und/oder zwischen dem wenigstens einen Halterungsmittel (220) und den Seiherstäben (11) zum Halterungserfolg der Halterungsmittel (220) beiträgt. Daher sieht die Erfindung Werkstoffe wie beispielsweise Moosgummi, Gummi, Kautschuk, Kunststoff oder Werkstoffe mit adhäsiven Oberflächen für den wenigstens einen Antirutschstreifen (214) vor, die geeignet sind, die Haftreibung zwischen Basiselement (210) und den Seiherstäben (11) und/oder zwischen dem wenigstens einen Halterungsmittel (220) und den Seiherstäben (11) im Vergleich zu dessen Werkstoffpaarungen zu erhöhen.

Der wenigstens eine Antirutschstreifen (214) ist zumindest bereichsweise an wenigstens einer Fläche des Basiselementes (210) und/oder an wenigstens einer Fläche des Halterungsmittels (220) derart an- oder festgelegt, dass dieser als Anlagefläche der Seiherstäbe (11) des Seiherstabsets (10) in Richtung des Basiselementes (210) und oder in Richtung des Halterungsmittels (220) nutzbar ist. Vorzugsweise ist vorgesehen, den wenigstens einen Antirutschstreifen (214) durch Kleben zumindest bereichsweise an der Fläche des Basiselementes (210) und/oder an der Fläche des Halterungsmittels (220) festzulegen, um auf diese Weise eine vereinfachte Handhabung bei der Bildung des Seiherstabpaketes (100) zu unterstützen.

In einer weiteren Ausführungsform und gezeigt in Figur 1 kann vorgesehen sein, dass das Basiselement (210) um wenigstens eine Strebe (213) ergänzt ist. Die wenigstens eine Strebe (213) kann dauerhaft oder temporär mit dem Basiselement (210) gekoppelt sein und kann zumindest eine von mehreren funktionellen Aufgaben realisieren.

Eine erste Aufgabe der wenigstens einen Strebe (213) kann darin bestehen, die Formstabilität des teilzylidrisch ausgeprägten Basiselementes (210) gegen äußere Krafteinwirkungen und insbesondere gegen die Spannkräfte des wenigstens einen Halterungsmittels (220) zu unterstützen. Diese mögliche Aufgabe wird erreicht dadurch, dass die wenigstens einen Strebe (213) längs ihrer Achse Druck-, Knick- und/oder Stauchkräfte aufnimmt und die Biegebelastung des Basiselementes (210) reduziert. Vorzugsweise ist die wenigstens eine Strebe (213) in Höhe oder benachbart zu dem wenigstens einen Halterungsmittel (220) angeordnet, um auf diese Weise für direkte Kraftflussrichtungen mit möglichst kurzen Kraftwirkungslinien zu unterstützen.

Eine weitere Aufgabe der wenigstens einen Strebe (213) kann darin bestehen, eine funktionshaptisch günstige Situation für das Montage- und Handhabungspersonal zu schaffen dadurch, dass diese als Handgriff nutzbar ist. Für die Handhabung und Montage des Seiherstabpaketes (100) ist besonders vorteilhaft, dass die die als Handgriff gestaltete und nutzbare Strebe (213) in der Nähe des summarischen Gewichtsmittelpunktes des Seiherstabpaketes (100) befindet und neben der eigentlichen Gewichtskraft die sich ergebenden Drehmomente reduziert. Sind zwei oder mehrere Streben (213) vorgesehen kann dieser für das Personal entlastende Effekt durch symmetrische Anordnung der Streben (213) erreicht werden.

Additiv oder alternativ zur Formstabilitätsaufgabe und/oder der Handgriffaufgabe kann die wenigstens eine Strebe (213) als Angriffsbereich für ein Gehänge nutzbar sein. Übliche Gehänge von Werkstatt-, Hallen- oder Produktionskränen und Handhabungshilfen sind häufig aus Haken, Krallen oder Einhängegurten gebildet und benötigen für ihre Verwendung eine gehängekonformen Bereich an der zu hebenden Last. Die wenigstens eine Strebe (213) als solche oder entsprechend geometrisch ausgebildet kann als Gehängeangriffsbereich dienen.

Weitere Funktionen der Strebe gebildet als Stange, Teleskopstange (213) bei der Verwendung im Zusammenhang mit einer Setvorrichtung (200) mit ebenem Basiselement (211) können realisiert werden.

In einer Ausgestaltung des Seiherstabpaketes (100) als Baueinheit ist daran gedacht, das Gesamtgewicht auf ca. bis zu 35 kg zu begrenzen, um die Handhabung auch ohne Kräne oder Tragehilfen verschiedener Art für eine oder mehrere Personen zu ermöglichen. Grundsätzlich kann aber in Abhängigkeit von den jeweiligen Anwendungsanforderungen auch ein höheres oder ein geringeres Gesamtgewicht realisiert werden. Typischerweise wird das Gesamtgewicht durch die Anzahl der je Seiherhälfte eingebauten Seiherstäbe bestimmt.

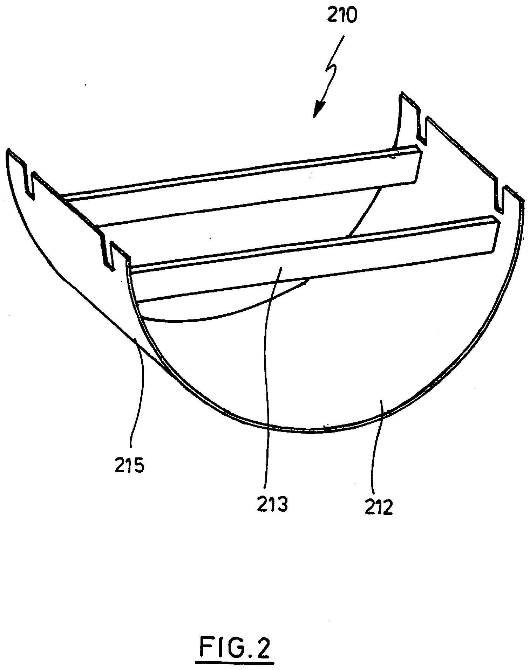

Figur 2 verdeutlicht ein Ausführungsbeispiel des Basiselementes (210) der Setvorrichtung (200) in einer dreidimensionalen Modelldarstellung. Im gezeigten Beispiel wird das erfindungsgemäße halb-hohlzylindrische Basiselement (212) abgebildet, dessen axiale Schnittgeometrie weitgehend kongruent zur Form des Seiherstabkorbes bzw. eines seiner Felder ist.

Das Basiselement (212) wird primär durch ein bogenförmiges Grundmaterial aus Metall, Kunststoff oder anderen geeigneten Werkstoffen gebildet. Entweder weist das Basiselement (212) bereits als Halbzeug eine zum Seiherstabkorb weitgehend kongruente geometrische Form auf oder es ist zumindest bereichsweise elastisch und/oder plastisch verformbar und auf diese Weise geometrisch an die Seiherstabkorbkontur anpassbar.

Das Basiselement (210, 212) ist in Figur 2 ergänzt um zwei Streben (213). Wird das Basiselement (210) durch ein verformbares, ebenes und bogenförmiges Halbzeug gebildet, wird vorzugsweise eine weitere Aufgabe durch die wenigstens eine Strebe (213) realisiert, die darin besteht, entgegen der meist vorhandenen elastischen Rückstellkräfte des Halbzeugmaterials das Basiselement (210) in seiner halbzylindrischen Gestalt zu fixieren.

In das Basiselement (210, 212) sind optional mögliche Ausklinkungen (215) eingebracht, um eine definierte und formschlüssige Lagefixierung der Halterungsmittel (220) zu gewährleisten.

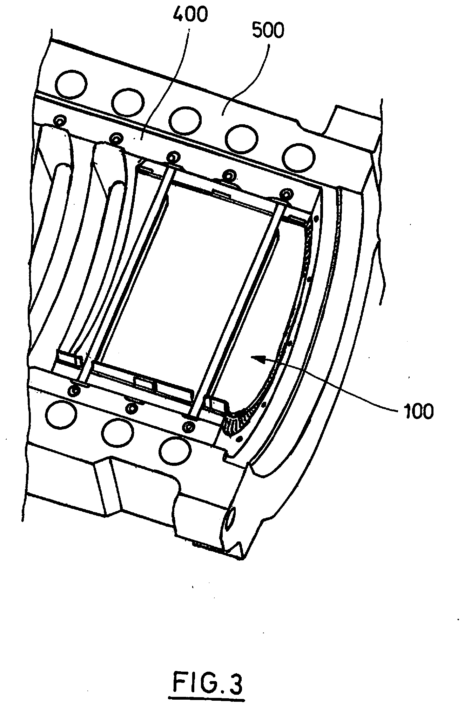

Figur 3 umfasst in einer perspektivischen Illustration das Seiherstabpaket (100) in einem Montageschritt eingesetzt in den Seiherstabkorb (400). Dargestellt ist ein geöffneter Pressraum mit einem Seiherstabkorb (400), der vorzugsweise in Axialrichtung hälftig teilbar ist und von einem in gleicher Weise teilbaren Gehäuse, einer Aufnahme oder Gurt (500) umschlossen ist.

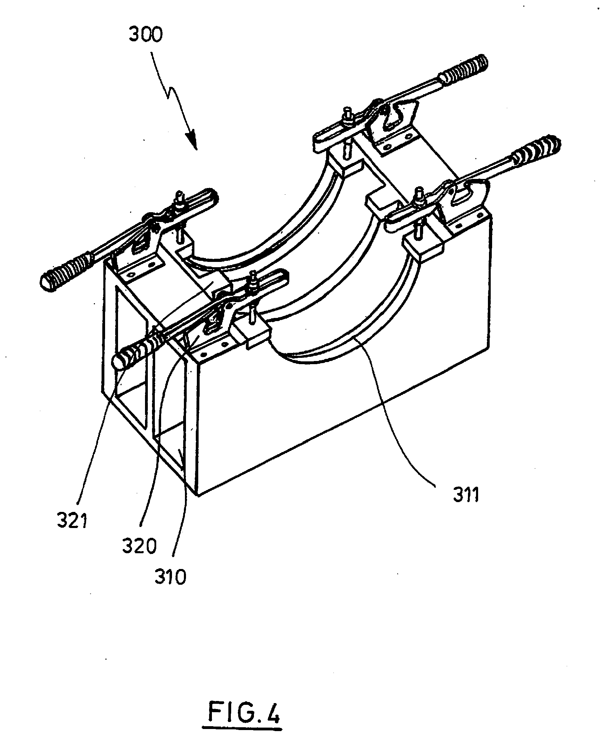

Figur 4 zeigt die erfindungsgemäße Vorrichtung zur Herstellung des Seiherstabpaketes (300) bzw. des Seiherstabsets (10) in einer räumlichen Illustration. Die Vorrichtung zur Herstellung des Seiherstabpaketes (300) ist zumindest dann hilfreich für die Herstellung von Seiherstabpaketen (100), wenn Setvorrichtungen (200) mit teilzylindrischen bzw. teilhohlzylindrischen Basiselementen (212) und dadurch direkt in teilzylindrischer bzw. teilhohlzylindrischer Gestaltung verwendet werden.

Die Vorrichtung zur Herstellung des Seiherstabpaketes (300) ist im Wesentlichen durch die Vorrichtungsbestandteile eines Grundkörpers (310) sowie wenigstens einer Spannvorrichtung (320) mit dazu in einer Wirkverbindung stehenden Spannpratze (321) gebildet und derart gestaltet, dass eine Mehrzahl von Seiherstäben (11) in einen dazu ausgelegten Aufnahmebereich (311) des Grundkörpers (310) eingebracht werden können.

Die wenigstens eine Spannvorrichtung (320) ist vorzugsweise angrenzend an den Aufnahmebereich (311) angeordnet und in einer Ausführungsvariante als Schnellspanner realisiert. Weiterhin ist die Spannvorrichtung (320) vorteilhaft derart angeordnet, dass diese eine längsseitige Verspannung einer Mehrzahl von Seiherstäben (11) unterstützt. In einer besonders vorteilhaften Ausführungsform ist die Spannvorrichtung (320) einstellbar. Um die Handhabung zu vereinfachen und/oder zu beschleunigen kann der Schnellspanner als einstellbarer Kniehebelspanner ausgeführt werden.

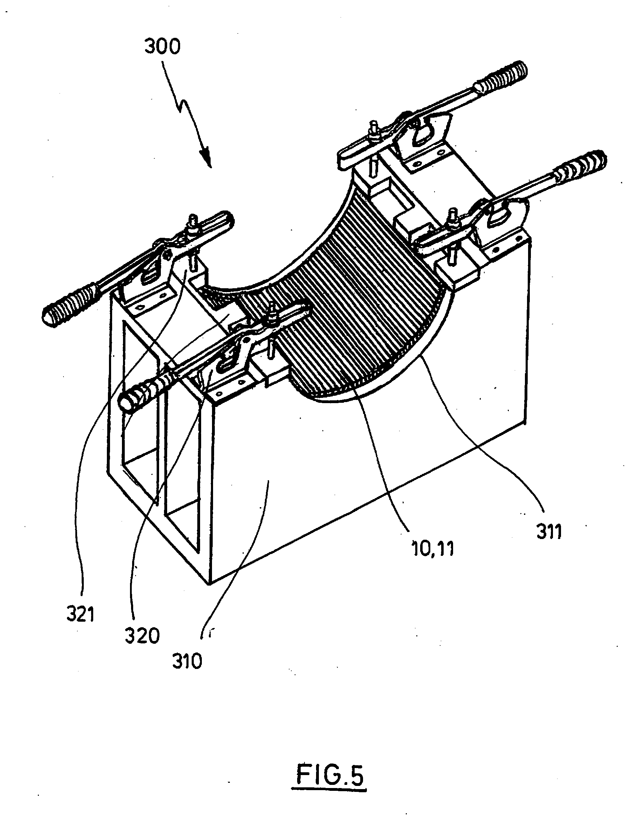

Figur 5 zeigt die Vorrichtung zur Herstellung des Seiherstabpaketes (300) mit einer Mehrzahl von in die Vorrichtung eingelegten Seiherstäben (11) zur Bildung eines Seiherstabsets (10) in einer Situation verspannt mit der wenigstens einen Spannvorrichtung (320).

Um das Seiherstabpaket (100) mittels der Vorrichtung zur Herstellung des Seiherstabpaketes (300) zu bilden, werden zunächst mehrere Seiherstäbe (11) in montagerichtiger Orientierung und Positionierung in den Aufnahmebereich (311) angeordnet und anschließend mit der Spannvorrichtung (320) gegeneinander verspannt.

Das Basiselement (210), das im gezeigten Beispiel der Vorrichtung zur Herstellung des Seiherstabpaketes (300) vorzugsweise ein teilhohlzylindrisches Basiselement (212) ist, wird in die durch die Mehrzahl von Seiherstäben (11) gebildete Anlageschulter eingelegt.

Zur Herstellung des Seiherstabpaketes (100) als Baueinheit wird durch die Halterungsmittel (220) eine temporäre und lösbare Verbindung von Basiselement (210) und Seiherstabset (10) hergestellt, die sodann durch Lösen der Spannvorrichtung (320) aus der Vorrichtung zur Herstellung des Seiherstabpaketes (300) entnehmbar ist.

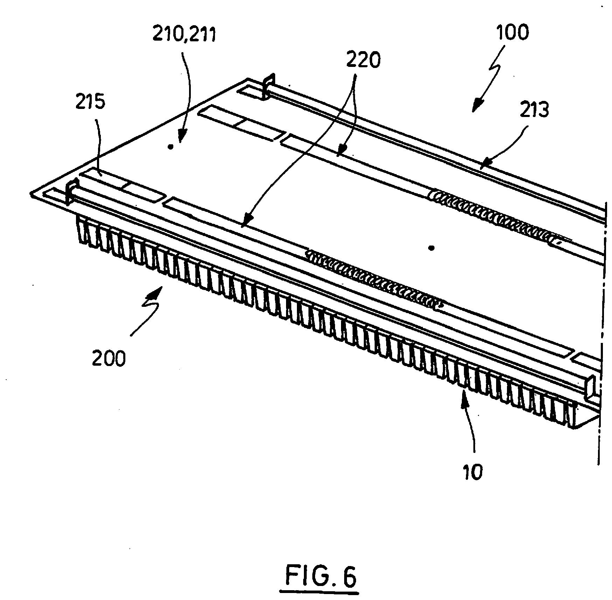

Figur 6 verdeutlicht schematisch eine Ausführungsvariante des Seiherstabpaketes (100) im Wesentlichen bestehend aus einer Setvorrichtung (200) und einem Seiherstabset (10) in einer perspektivischen Ansicht. Dieses Seiherstabpaket (100) folgt in seiner geometrischen Gestaltung der Setvorrichtung (200) mit einem ebenen Basiselement (211) und erstreckt sich entlang von zwei Raumrichtungen in einer Ebene.

Das ebene Basiselement (211) dieses Ausführungsbeispiels ist durch ein bogenförmiges Halbzeug gebildet. Es ist daran gedacht, das ebene Basiselement (211) in flexibler Weise zu gestalten und zu dimensionieren, um eine teilhohlzylindrische Verformung um eine zu den Seiherstäben parallelen Achse zu unterstützen und auf diese Weise dem Seiherstabpaket (100) als Baueinheit eine geometrische Form einzuprägen, die kongruent oder ähnlich der Kontur des Seiherstabkorbes und/oder eines seiner Felder ist. Alternativ dazu kann das bogenförmige und damit ebene Basiselement (211) wenigstens bereichs- oder abschnittsweise unflexibel und dadurch biegesteif ausgeführt sein.

Die zumindest temporäre und lösbare Fixierung des Seiherstabsets (10) an dem Basiselement (211) erfolgt durch wenigstens ein Halterungsmittel (220). Das Halterungsmittel (220) ist durch Spannbänder, Spannstreifen oder vergleichbare zugbelastbare Maschinenelemente gebildet.

Um die je nach Ausführungsform optional erforderliche elastische und/oder plastische Verformung des Seiherstabpaketes (100) aus einer ebenen in eine teilzylindrische Erstreckung zu unterstützen, ist es erforderlich, dass die Halterungsmittel (220) wenigstens bereichsweise Längenänderungen realisieren können und gleichzeitig die zur Fixierung des Seiherstabsets (10) erforderliche Mindestspannkraft in allen Längenänderungszuständen gewährleisten.

Die erfindungsgemäße Lehre löst diese konstruktive Problemstellung durch wenigstens einen bereichsweise elastischen Abschnitt des Halterungsmittels (220). Dieser wenigstens eine elastische Abschnitt kann beispielsweise ein elastisches Spannband auf Gummi-, Kautschuk- oder Elastomerbasis sein. Eine andere Realisierungsmöglichkeit erkennt die Erfindung durch wenigstens ein in das Halterungsmittel integriertes Federelement. Geeignete Federelemente sind insbesondere Zug-, Druck-, oder Zugdruckfedern wie beispielsweise Schraubfedern. Die Auswahl geeigneter Federelemente erfolgt über die jede Feder charakterisierende Federkennlinie und orientiert sich an der erforderlichen Längenänderungskapazität und Mindest- sowie zulässigen Höchstkraft. Alternativ kann das Spannband auch aus Stahl ausgebildet sein.

Analog zum Ausführungsbeispiel gemäß Figur 1 kann auch das wenigstens eine Halterungsmittel (220) des in Figur 6 gezeigten Seiherstabpaketes (100) in ebener Erstreckung durch wenigstens eine Ausklinkung (215) im Basiselement (211) geführt sein.

Um sowohl die ebene Erstreckungsstabilität als auch die optional wenigstens bereichsweise teilzylindrische Verformung des Seiherstabpaketes (100) um eine zu den Seiherstäben parallelen Achse zu unterstützen, kann wenigstens eine Strebe in Form einer Stange bzw. Teleskopstange (213) vorgesehen sein. Neben den aufgezeigten Aufgaben bzw. Funktionen der wenigstens einen Strebe (213) des teilzylindrischen Seiherstabpaketes (100) kann im gezeigten Ausführungsbeispiel zusätzlich oder alternativ auch eine Anschlagfunktion für die Bewegungsbegrenzung aus der ebnen in die teilzylindrische räumliche Erstreckung Gegenstand sein.

Besonderer Vorteil des in Figur 6 gezeigten Ausführungsbeispiels ist ein gegenüber dem inelastischen teilzylindrischen Seiherstabpaket (100) reduzierter Raumbedarf beim Handling, Transport und in Umverpackungen.

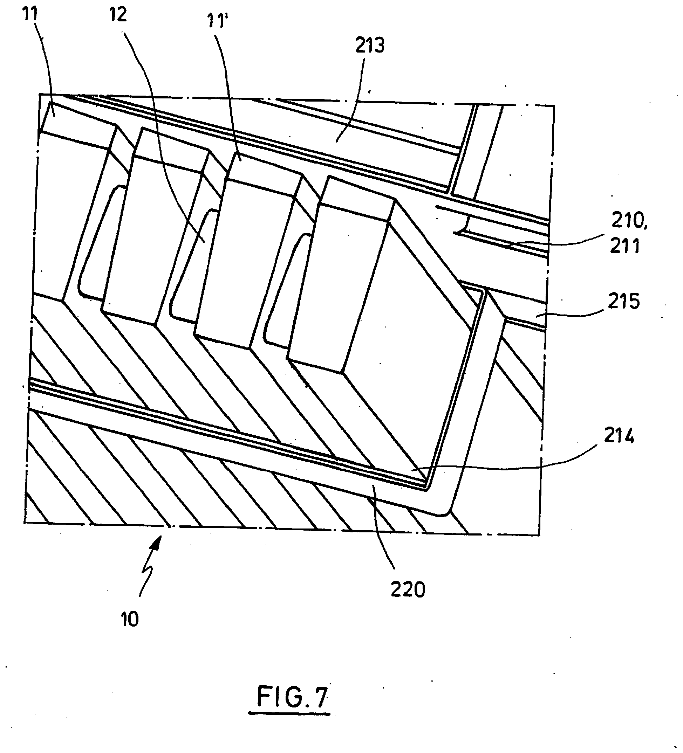

Figur 7 verdeutlicht die Detailansicht auf einen Bereich des Seiherstabsets (10) mit einer Mehrzahl von Seiherstäben (11) mit Halterungsmittel (220) und daran festgelegtem Antirutschstreifen (214).

Die Mehrzahl von Seiherstäben (11) des Seiherstabsets (10) mit Distanzelementen (12) sind montagerichtig orientiert und positioniert und liegen mit ihrer Verschleißlängsfläche (11') an dem Basiselement (210, 211) an. Das wenigstens eine Halterungsmittel (220) weist in dieser Ausführungsvariante wenigstens bereichsweise einen Antirutschstreifen (214) auf, sodass der Haft- und/oder Reibbeiwert im Vergleich zur Werkstoffpaarung ohne Antirutschstreifen (214) vergrößert ist. Optional additiv und/oder alternativ ist es möglich und erfindungsgemäß vorgeschlagen, wenigstens bereichsweise einen Antirutschstreifen (214) zwischen Basiselement (210, 211) und den Seiherstäben (11) anzuordnen.

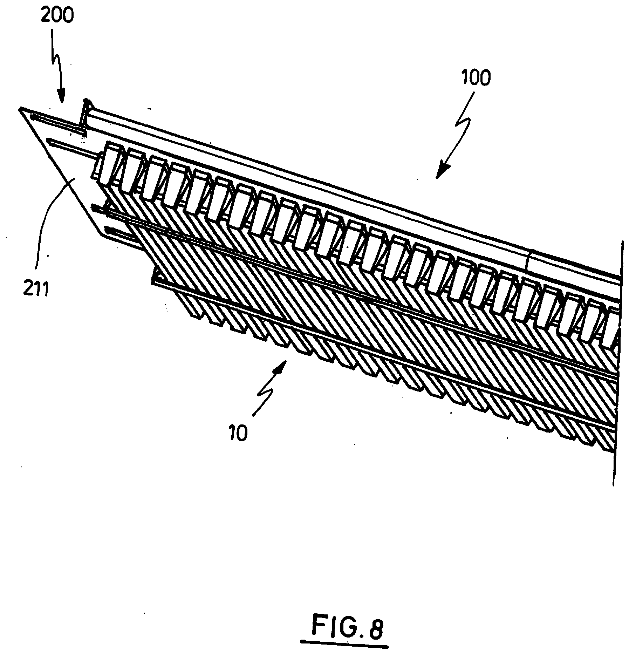

Figur 8 zeigt eine perspektivische Ansicht eines größeren Ausschnittes der Ausführungsvariante des Seiherstabpaketes (100) gemäß Figur 6 und 7 im Wesentlichen bestehend aus einer Setvorrichtung (200) und einem Seiherstabset (10).

Zur Bildung des Seiherstabpaketes (100) in ebener Erstreckung und unter Verwendung eines ebenen Basiselementes (211) ist eine Vorrichtung zur Herstellung des Seiherstabpaketes (300) optional möglich, jedoch nicht zwingend. Wird eine Vorrichtung zur Herstellung des Seiherstabpaketes (300) zur Bildung des Seiherstabpaketes (100) in ebener Erstreckung eingesetzt, sind der Aufnahmebereich (311) und die relative Lage der wenigstens einen Spannvorrichtung (320) gegenüber der in Figur 4 und 5 gezeigten Variante derart modifiziert, dass der Aufnahmebereich (311) die Anordnung der Seiherstäbe (11) in einer ebenen Erstreckung unterstützt und die Spannkräfte in der Ebene verlaufen bzw. wirken.

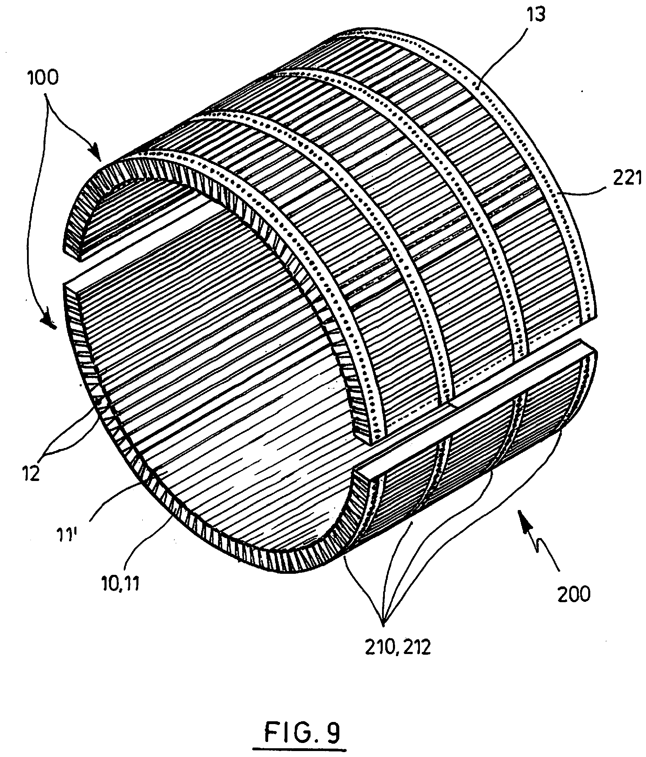

Figur 9 zeigt eine Ansicht zweier Seiherstabpakete (100) einer weiteren erfindungsgemäßen Ausführungsform der Erfindung. Die Seiherstabpakete (100) sind jeweils halb-hohlzylindrisch ausgebildet und weisen jeweils ein Seiherstabset (10) aus einer Mehrzahl von Seiherstäben (11) auf. Zwischen den einzelnen Seiherstäben (11) sind Distanzelemente (12) angeordnet, um eine definierte Ausrichtung der Seiherstäbe (11) zueinander zu realisieren. Die Distanzelemente (12) können Bestandteil der Seiherstäbe (11) sein, oder als separate Bauteile ausgebildet sein. Die innenliegende Verschleißlängsfläche (11') ist als eine Panzerung ausgebildet, um den Verschleiß zu reduzieren. Die Setvorrichtungen (200) weisen je ein mehrteiliges Basiselement (210, 212) auf, das als vier radial außenliegend am jeweiligen Seiherstabset (10) angeordneten Verbindungsstreifen (221) ausgebildet ist. Die Verbindungsstreifen (221) sind in der dargestellten vorteilhaften Ausführungsform aus einem Blech gefertigt und sind mit den einzelnen Seiherstäben (11) und Distanzelementen (12) verbunden. Die Verbindung (13) ist beispielsweise durch eine Verschweißung, besonders vorteilhaft durch eine Punktverschweißung, oder durch eine Verlötung realisiert. In einer besonders vorteilhaften Ausführungsform weisen die Verbindungsstreifen (221) im Bereich der vorgesehenen Verbindung (13) Aussparungen, beispielsweise Bohrungen, auf, die eine Verbindung (13) der Seiherstäbe (11) und Distanzelemente (12) in der vorgesehenen Position erleichtert. Die Verbindungsstreifen (221) gewährleisten in ihrer Funktion als mehrteiliges Basiselement (210) die Bündelung von Seiherstäben (11) und Distanzelementen (12) zu einem Seiherstabpaket (100) und realisieren zusätzlich einen Schutz der Sitzflächen in den Seihergestellen bzw. Seiherstabkörben (400). Durch die hohen Auftretenden Drücke werden die Seiherstäbe (11) mit ihren außenliegenden Flächen und Kanten in einer herkömmlichen Anordnung derart stark gegen die Sitzflächen der Seihergestelle bzw. Seiherstabkörbe (400) gepresst, dass an diesen Eindruckstellen entstehen, was durch die außenliegenden Streifen (221) der erfindungsgemä-ßen Seiherstabpakete (100) größtenteils verhindert wird. Die Verbindungsstreifen (221) weisen eine gewisse Flexibilität auf, sodass das Seiherstabpaket (100) für einen Transport aus der teilzylindrischen in eine ebene Form überführbar ist.

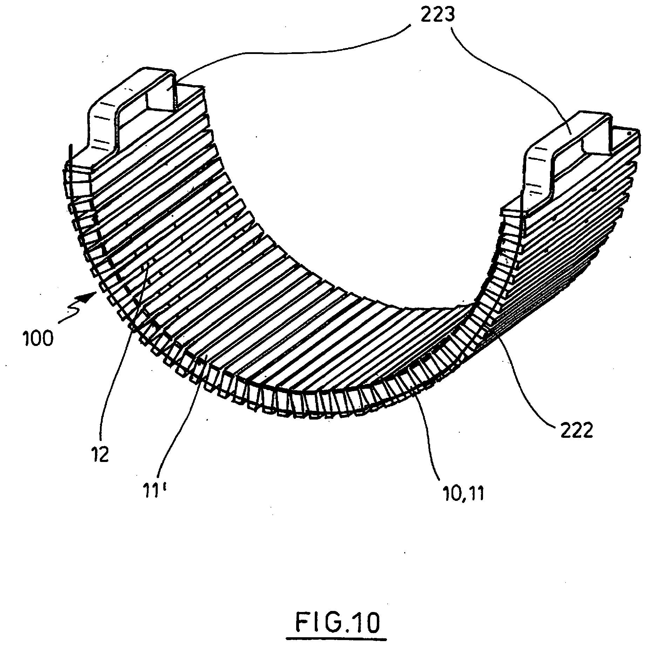

Figur 10 zeigt eine perspektivische Ansicht einer weiteren erfindungsgemäßen Ausführungsform eines Seiherstabpaketes (100). Das Seiherstabpaket (100) weist ein Seiherstabset (10) aus mehreren Seiherstäben (11) auf, die über zwei Verbindungsdrähte (222) miteinander verbunden sind. Die Seiherstäbe (11) weisen Bohrungen auf, durch die die Verbindungsdrähte (222) laufen. Die zwischen den Seiherstäben (11) angeordneten Distanzelemente (12) können ebenfalls mithilfe der Verbindungsdrähte (222) fixiert sein. An den seitlichen Enden weist das Seiherstabpaket (100) jeweils eine Haltevorrichtung (223) auf, die eine einfache Handhabung des Seiherstabpaketes (100) ermöglichen und die nach der Positionierung des Seiherstabpaketes (100) in einem Seiherstabkorb (400) entfernbar sind. Die Verbindungsdrähte (222) realisieren die erforderliche Flexibilität des Seiherstabpaketes (100), um dieses im Transportfall von der teilzylindrischen in eine flache Gestalt überführbar zu machen.

## Patentansprüche

1. Seiherstabpaket (100) zum Einbau in einen Seiherstabkorb (400) einer Seiher-Schneckenpresse, aufweisend wenigstens ein Seiherstabset (10) gebildet aus einer Mehrzahl von Seiherstäben (11) sowie einer Setvorrichtung (200), die die Mehrzahl von Seiherstäben (11) des wenigstens einen Seiherstabsets (10) fixiert, die Setvorrichtung (200) weiterhin aufweisend wenigstens ein Basiselement (210) und ein Halterungsmittel (220), **dadurch gekennzeichnet, dass** das Basiselement (210) eine halb-hohlzylindrische Form aufweist und dass das Seiherstabpaket (100) eine zumindest temporäre Baueinheit ist, dass das Basiselement (210) temporär oder dauerhaft mit wenigstens einer Strebe, Stange (213) gekoppelt ist und dass die Strebe, Stange (213) das Basiselement (210) formstabilisiert, dass die wenigstens eine Strebe, Stange (213) funktionell als Handgriff und/oder Gehängeangriffsbereich nutzbar ist, oder dass das Seiherstabpakte (100) mindestens eine separate Haltevorrichtung (223) aufweist und dass das wenigstens eine Halterungsmittel (220) aus zumindest einem zugbelastbaren, mindestens bereichsweise elastischen Spannband gebildet ist.

2. Seiherstabpaket (100) nach Anspruch 1, **dadurch gekennzeichnet, dass** die Mehrzahl von Seiherstäben (11) des Seiherstabsets (10) in einer montagerichtigen Orientierung und Positionierung zueinander angeordnet sind.

3. Seiherstabpaket (100) nach mindestens einem der vorstehenden Ansprüche, **dadurch gekennzeichnet, dass** das wenigstens eine Seiherstabset (10) zusätzlich Distanzelemente (12) und/oder Abstreifer und/oder endseitige Schlussleisten aufweist.

4. Seiherstabpaket (100) nach mindestens einem der vorstehenden Ansprüche, **dadurch gekennzeichnet, dass** die Seiherstäbe (11) über feste Verbindungen (13) mit dem mindestens einen Basiselement (210) verbunden sind.

5. Seiherstabpaket (100) nach mindestens einem der vorstehenden Ansprüche, **dadurch gekennzeichnet, dass** wenigstens ein Antirutschstreifen (214) zumindest bereichsweise an wenigstens einer Fläche des Basiselementes (210) und/oder an wenigstens einer Fläche des Halterungsmittels (220) vorgesehen ist.

## Claims

1. Cage bar pack (100) for installation into a strainer bar cage (400) of a cage screw press, having at least one cage bar set (10) formed from a plurality of cage bars (11) and a set apparatus (200) which fixes the plurality of cage bars (11) of the at least one cage bar set (10), the set apparatus (200) having, furthermore, at least one base element (210) and one securing means (220), **characterized in that** the base element (210) has a hollow semi-cylindrical shape, and **in that** the cage bar pack (100) is an at least temporary structural unit, **in that** the base element (210) is coupled temporarily or permanently to at least one strut/rod (213), and **in that** the strut/rod (213) dimensionally stabilizes the base element (210), **in that** the at least one strut/rod (213) can be used functionally as a handle and/or overhead action region, or **in that** the cage bar pack (100) has at least one separate holding apparatus (223), and **in that** the at least one securing means (220) is formed from at least one tensioning strap which is elastic at least in regions and can be subjected to a tensile load.

2. Cage bar pack (100) according to Claim 1, **characterized in that** the plurality of cage bars (11) of the cage bar set (10) are arranged in an orientation and position with respect to one another which are correct for mounting.

3. Cage bar pack (100) according to at least one of the preceding claims, **characterized in that** the at least one cage bar set (10) additionally has spacer elements (12) and/or scrapers and/or end-side ending slats.

4. Cage bar pack (100) according to at least one of the preceding claims, **characterized in that** the cage bars (11) are connected via fixed connections (13) to the at least one base element (210).

5. Cage bar pack (100) according to at least one of the preceding claims, **characterized in that** at least one anti-slip strip (214) is provided at least in regions on at least one surface of the base element (210) and/or on at least one surface of the securing means (220).

## Revendications

1. Paquet de barres de tamis (100) destiné à être monté dans un panier de barres de tamis (400) d'une presse à vis à tamis, présentant au moins un ensemble de barres de tamis (10) formé d'une pluralité de barres de tamis (11) ainsi qu'un dispositif de réglage (200) qui fixe la pluralité de barres de tamis (11) de l'au moins un ensemble de barres de tamis (10), le dispositif de réglage (200) présentant en outre au moins un élément de base (210) et un moyen de retenue (220), **caractérisé en ce que** l'élément de base (210) présente une forme semi-cylindrique creuse et **en ce que** le paquet de barres de tamis (100) est une unité de construction au moins temporaire, **en ce que** l'élément de base (210) est couplé temporairement ou en permanence à au moins une entretoise, une tige (213) et **en ce que** l'entretoise, la tige (213) stabilise la forme de l'élément de base (210), **en ce que** l'au moins une entretoise, une tige (213) peut être utilisée fonctionnellement comme poignée et/ou zone de prise de suspension, ou **en ce que** le paquet de barres de tamis (100) présente au moins un dispositif de maintien (223) séparé et **en ce que** l'au moins un moyen de maintien (220) est formé d'au moins une bande de serrage au moins partiellement élastique, pouvant être chargée en traction.

2. Paquet de barres de tamis (100) selon la revendication 1, **caractérisé en ce que** la pluralité de barres de tamis (11) de l'ensemble de barres de tamis (10) sont agencées dans une orientation et un positionnement corrects pour le montage.

3. Paquet de barres de tamis (100) selon au moins l'une quelconque des revendications précédentes, **caractérisé en ce que** l'au moins un ensemble de barres de tamis (10) présente en outre des éléments d'écartement (12) et/ou des racleurs et/ou des baguettes de fermeture d'extrémité.

4. Paquet de barres de tamis (100) selon au moins l'une quelconque des revendications précédentes, **caractérisé en ce que** les barres de tamis (11) sont reliées à l'au moins un élément de base (210) par l'intermédiaire de liaisons fixes (13).

5. Paquet de barres de tamis (100) selon au moins l'une quelconque des revendications précédentes, **caractérisé en ce qu'**au moins une bande antidérapante (214) est prévue au moins par zones sur au moins une surface de l'élément de base (210) et/ou sur au moins une surface du moyen de retenue (220).
